(19) Europäisches Patentamt
European Patent Office
Office européen des brevets

(11) **EP 4 745 218 A1**

(12) **EUROPEAN PATENT APPLICATION**
published in accordance with Art. 153(4) EPC

(43) Date of publication:
**20.05.2026 Bulletin 2026/21**

(21) Application number: **24839789.5**

(22) Date of filing: **10.07.2024**

(51) International Patent Classification (IPC):
*C11D 7/26* (2006.01)      *C09D 5/02* (2006.01)
*C09D 7/63* (2018.01)      *C09D 133/00* (2006.01)
*C09D 201/00* (2006.01)    *C11D 1/66* (2006.01)
*C11D 1/72* (2006.01)      *C11D 3/20* (2006.01)
*C11D 3/37* (2006.01)

(52) Cooperative Patent Classification (CPC):
**C09D 5/02; C09D 7/63; C09D 133/00;
C09D 201/00; C11D 1/66; C11D 1/72; C11D 3/20;
C11D 3/37; C11D 7/26**

(86) International application number:
**PCT/JP2024/024971**

(87) International publication number:
**WO 2025/013899 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023  JP 2023113473**

(71) Applicant: **ThreeBond Co., Ltd.
Tokyo 192-0398 (JP)**

(72) Inventors:
• **NAGAI, Sena**
  **Hachioji-shi, Tokyo 192-0398 (JP)**
• **ASAI, Kuniyasu**
  **Hachioji-shi, Tokyo 192-0398 (JP)**

(74) Representative: **Crow, Martin
Venner Shipley LLP
200 Aldersgate
London EC1A 4HD (GB)**

(54) **DETERGENT COMPOSITION AND COATING AGENT COMPOSITION**

(57)    The present invention provides a cleaning agent composition or a coating agent composition having excellent antirust property. The present invention relates to a cleaning agent composition comprising a component (A): an alkaline aqueous solution; and a component (B): sodium benzoate, wherein a pH of the cleaning agent composition is 8.0 to 11.0, and a coating agent composition comprising a component (A): an alkaline aqueous solution; a component (B): sodium benzoate; and a component (C): emulsion particles, wherein a pH of the coating agent composition is 8.0 to 11.0.

**EP 4 745 218 A1**

**Description**

**TECHNICAL FIELD**

The present invention relates to a water-based cleaning agent composition and a water-based coating agent composition.

**BACKGROUND ART**

Sodium benzoate has been known as an antirust agent. Patent Document 1 describes that adjusting the pH of a sodium benzoate aqueous solution to be acidic and kneading it into a base material to form a volatile rust-preventive film, thereby preventing rust on metal parts and the like. However, for processed metal parts, unless contaminants such as oil and dust are removed, the risk of rust occurring on the metal parts themselves cannot be reduced, so cleaning of metal parts is important from the perspective of rust prevention. Moreover, the metal parts are subjected to an antirust treatment using a coating agent after cleaning.

Citation List

Patent Literatures

Patent Literature 1: Japanese Patent Laid-Open No. 2015-78410

**SUMMARY OF INVENTION**

Technical Problem

However, conventionally, cleaning agents or coating agents used to clean or coat metal parts tend to be gradually deteriorated due to use for a long period of time, and it has been difficult to continue to use the same agent (cleaning agent or coating agent) for a long period of time. Moreover, when a cleaning treatment or a coating treatment is performed using a conventional cleaning agent or coating agent, rust is generated within a short period of time (for example, one day after the treatment), resulting in insufficient antirust performance. Therefore, a cleaning agent or coating agent having a sufficient antirust effect has been desired.

Solution to Problem

As a result of intensive studies to achieve the above object, the present inventors found approaches relating to a water-based cleaning agent composition and a water-based coating agent composition, and completed the present invention.

Next, the gist of the present invention will be described. The first embodiment of the present invention is a cleaning agent composition containing a component (A) and a component (B) below:

component (A): an alkaline aqueous solution; and

component (B): sodium benzoate,

wherein a pH of the cleaning agent composition is 8.0 to 11.0.

The second embodiment of the present invention is the cleaning agent composition according to the first embodiment, wherein a pH of the component (A) is 9.0 to 12.0.

The third embodiment of the present invention is a coating agent composition containing a component (A) to a component (C) below:

component (A): an alkaline aqueous solution;

component (B): sodium benzoate; and

component (C): emulsion particles,

wherein a pH of the coating agent composition is 8.0 to 11.0.

The fourth embodiment of the present invention is the coating agent composition described in the third embodiment, wherein a pH of the component (A) is 9.0 to 12.0.

The fifth embodiment of the present invention is the coating agent composition according to the third embodiment or the fourth embodiment, further containing: a surfactant.

The sixth embodiment of the present invention is the coating agent composition according to the fifth embodiment, wherein the surfactant is a nonionic surfactant.

The seventh embodiment of the present invention is the coating agent composition according to the sixth embodiment, wherein the nonionic surfactant is a polyoxyethylene-based nonionic surfactant.

The eighth embodiment of the present invention is the coating agent composition according to any of the third embodiment to the seventh embodiment,

wherein the component (C) is emulsion particles containing a (meth)acrylic polymer.

The ninth embodiment of the present invention is a method for cleaning a metal part, the method including: a cleaning step of immersing a metal part in the cleaning agent composition according to the first embodiment or the second embodiment and irradiating ultrasonic waves.

The tenth embodiment of the present invention is a method for coating a metal part, the method including: a coating step of immersing a metal part in the coating agent composition according to the third embodiment to the eighth embodiment, or irradiating ultrasonic waves thereafter; and a drying step of drying the metal part after the coating step.

The eleventh embodiment of the present invention is an antirust method of a metal part, the method including: a cleaning step of immersing a metal part in the cleaning agent composition according to the first embodiment or the second embodiment, or irradiating ultrasonic waves thereafter; a coating step of immersing the metal part in the coating agent composition according to the third embodiment to the eighth embodiment after the cleaning step, and irradiating ultrasonic waves; and a drying step of drying the metal part after the coating step.

The twelfth embodiment of the present invention is the method for cleaning a metal part according to the ninth embodiment, wherein the metal part is a screwing member.

The thirteenth embodiment of the present invention is the method for coating a metal part according to the tenth embodiment, wherein the metal part is a screwing member.

The fourteenth embodiment of the present invention is the antirust method of a metal part according to the eleventh embodiment, wherein the metal part is a screwing member.

Effect of Invention

According to the present invention, a cleaning agent composition or a coating agent composition, which can be used for a long period of time and has excellent antirust property, is provided.

**DESCRIPTION OF EMBODIMENTS**

Hereinafter, embodiments for performing the present invention will be described in detail. The embodiments described herein are illustrative for embodying the technical concept of the present invention and are not intended to limit the present invention. Therefore, all other possible embodiments, methods for use, and operational techniques conceivable by those skilled in the art are included within the scope and gist of the present invention, as well as within the scope of the invention and their equivalents described in claims, without departing from the gist of the present invention. The embodiments described in the present specification can be optionally combined in any manner to create other embodiments. Furthermore, in the present specification, "X to Y" indicating a range means "X or more and Y or less," and "weight" and "mass", "wt%" and "mass%", and "parts by weight" and "parts by mass" are considered as synonyms. In the present specification, "A and/or B" encompasses the embodiments of A or B and A and B. In addition, in the present specification, the term "(meth)acrylic" encompasses both acryl and methacryl. Thus, for example, the term "(meth)acrylic acid" encompasses both acrylic acid and methacrylic acid. Similarly, the term "(meth)acrylate" encompasses both acrylate and methacrylate, and the term "(meth)acrylamide" encompasses both acrylamide and methacrylamide. In the present specification, unless otherwise specified, operations and measurements of physical properties and the like are performed at room temperature (20°C or more and 25°C or less) / a relative humidity of 40% RH or more and 50% RH or less.

<Cleaning agent composition>

One embodiment of the present invention is a cleaning agent composition containing a component (A) and a component (B) below:

component (A): an alkaline aqueous solution; and

component (B): sodium benzoate,

wherein a pH of the cleaning agent composition is 8.0 to 11.0. The cleaning agent composition having such a configuration can prevent generation of rust on a metal part after cleaning. For example, even when heating and drying are performed after cleaning with the cleaning agent composition, generation of rust on the metal part can be prevented. In addition, the cleaning agent composition of the present embodiment is highly stable, and can be stored and used for a long period of time. Therefore, the coating agent composition of one embodiment of the present invention prevents deterioration of the cleaning agent composition when a processed metal part such as a bolt is cleaned, and makes it possible to continue to use the same liquid for a long period of time.

<Coating agent composition>

Another embodiment of the present invention is a coating agent composition containing a component (A) to a component (C) below:

component (A): an alkaline aqueous solution;

component (B): sodium benzoate; and

component (C): emulsion particles,

wherein a pH of the coating agent composition is 8.0 to 11.0. The coating agent composition having such a configuration can prevent generation of rust on a metal part after coating. For example, when heating and drying are performed after coating, generation of rust on the metal part can be prevented. In addition, the coating agent composition of the present embodiment is highly stable, and can be stored and used for a long period of time. Therefore, the coating agent composition of one embodiment of the present invention prevents deterioration of the coating agent composition when a processed metal part such as a bolt is coated, and makes it possible to continue to use the same liquid for a long period of time. In addition, the coating agent composition of one embodiment of the present invention does not generate rust on the metal part by heating and drying.

Generally, when a metal part is cleaned with a water-based cleaning agent and is then dried after cleaning, rust may be generated on the metal part. As described above, regardless of a water-based composition, the cleaning agent composition and the coating agent composition according to one embodiment of the present invention get rid of oil dirt (cutting fluid and the like), and do not generate rust by drying even after cleaning. In addition, the coating agent composition according to another embodiment of the present invention forms a uniform coating film on the surface of an adherend, and does not generate rust after coating even when it is left to stand for a long period of time. In addition, a conventional cleaning agent or coating agent has low stability of a liquid, and as a period of use is longer, the liquid is gradually deteriorated, resulting in difficulty in use for a long period of time. The cleaning agent composition and the coating agent composition according to one embodiment of the present invention have high stability of a liquid, and as a period of use is longer, the state of the liquid does not change, allowing use for a long period of time.

The cleaning agent composition of one embodiment of the present invention and the coating agent composition of another embodiment of the present invention both contain the component (A) and the component (B). Hereinafter, the component (A) and the component (B), and other components (additives and the like) will be applied to the cleaning agent composition and the coating agent composition unless otherwise specified. Therefore, hereinafter, the "composition according to the present embodiment" encompasses both the cleaning agent composition and the coating agent composition. Description of either the cleaning agent composition or the coating agent composition will be described as the "cleaning agent composition according to the present embodiment" or the "coating agent composition according to the present embodiment".

Component (A)

The composition according to the present embodiment includes an alkaline aqueous solution as the component (A). Here, the alkaline aqueous solution as the component (A) may be a composition containing a basic compound and water. The component (A) (alkaline aqueous solution) that can be used in the composition according to the present embodiment may be an aqueous solution in which a basic compound is mixed with water such as ion-exchanged water, distilled water, or tap water, or may be alkaline electrolyzed water.

The alkaline aqueous solution has a pH of more than 7.0, preferably a pH of 7.5 to 12.0, more preferably a pH of 8.0 to 12.0, and still more preferably a pH of 9.0 to 12.0. According to one embodiment, the component (A) (alkaline aqueous solution) is an alkaline aqueous solution having a pH of 9.0 to 12.0. In addition, according to one embodiment, the component (A) (alkaline aqueous solution) is an alkaline aqueous solution having a pH of 9.5 to 11.5, an alkaline aqueous solution having a pH of 10.0 to 11.5, or an alkaline aqueous solution having a pH of 10.5 to 11.5. According to one embodiment, the component (A) (alkaline aqueous solution) is alkaline electrolyzed water. Therefore, the component (A) (alkaline aqueous solution) is preferably alkaline electrolyzed water having a pH of more than 7.0, more preferably alkaline electrolyzed water having a pH of 7.5 to 12.0, still more preferably alkaline electrolyzed water having a pH of 8.0 to 12.0, and particularly preferably alkaline electrolyzed water having a pH of 9.0 to 12.0. According to one embodiment, the component (A) (alkaline aqueous solution) is alkaline electrolyzed water having a pH of 9.5 to 11.5, alkaline electrolyzed water having a pH of 10.0 to 11.5, or alkaline electrolyzed water having a pH of 10.5 to 11.5.

When the component (A) is used in combination with the component (B) that will be described later, it can be used as the cleaning agent composition or the coating agent composition. When the component (A) is an alkaline aqueous solution having a pH of more than 7.0, or 7.5 to 12.0 (preferably a pH of 8.0 to 12.0, more preferably a pH of 9.0 to 12.0, still more preferably a pH of 9.5 to 11.5, particularly preferably a pH of 10.0 to 11.5, and most preferably a pH of 10.5 to 11.5), or alkaline electrolyzed water having a pH of more than 7.0, or 7.5 to 12.0 (preferably a pH of 8.0 to 12.0, more preferably a pH of 9.0 to 12.0, still more preferably a pH of 9.5 to 11.5, particularly preferably a pH of 10.0 to 11.5, and most preferably a pH of 10.5 to 11.5), deterioration of the liquid in the cleaning agent composition or the coating agent composition is prevented, and this allows use for a long period of time and can further achieve the antirust property.

Although the details of the mechanism by which the above-described configuration of the component (A) exhibits the above-described effects are unclear, it is believed that the environment, in which the antirust property of the component (B) is most exhibited in the composition according to the present embodiment, is the component (A). In addition, it is believed that the composition effectively gets rid of dirt from a metal part and keep the dirt in the liquid in a stable form, so that generation of aggregates is prevented, which allows use for a long period of time.

When the component (A) (alkaline aqueous solution) contains, for example, a basic compound, the pH may be more than 7.0, or 7.5 to 12.0 (preferably a pH of 8.0 to 12.0, more preferably a pH of 9.0 to 12.0, still more preferably a pH of 9.5 to 11.5, particularly preferably a pH of 10.0 to 11.5, and most preferably a pH of 10.5 to 11.5). In this case, as the basic compound, organic or inorganic basic compounds containing nitrogen, hydroxides of alkali metals or alkaline earth metals, various carbonates and bicarbonates, and the like can be used. Examples thereof include hydroxides of alkali metals, quaternary ammonium hydroxides or salts thereof, ammonia, and amines. Specific examples of the hydroxides of alkali metals include potassium hydroxide and sodium hydroxide. Specific examples of the carbonates or the bicarbonates include ammonium bicarbonate, ammonium carbonate, potassium bicarbonate, potassium carbonate, sodium bicarbonate, and sodium carbonate. Specific examples of the quaternary ammonium hydroxides or salts thereof include tetramethylammonium hydroxide, tetraethylammonium hydroxide, and tetrabutylammonium hydroxide. Specific examples of the amines include methylamine, dimethylamine, trimethylamine, ethylamine, diethylamine, triethylamine, ethylenediamine, monoethanolamine, N-($\beta$-aminoethyl)ethanolamine, hexamethylenediamine, diethylenetriamine, and triethylenetetramine.

Examples of the preferable basic compound from the viewpoint of the antirust property and the like include ammonia, potassium hydroxide, sodium hydroxide, tetramethylammonium hydroxide, tetraethylammonium hydroxide, ammonium bicarbonate, ammonium carbonate, potassium bicarbonate, potassium carbonate, sodium bicarbonate, and sodium carbonate. Among them, ammonia, potassium hydroxide, sodium hydroxide, tetramethylammonium hydroxide, and tetraethylammonium hydroxide are preferably exemplified. These basic compounds may be used alone or in combination of two or more kinds thereof.

The pH of the component (A) can be, for example, an alkaline aqueous solution having a pH of 9.0 to 12.0 by adjusting the pH of ion-exchanged water with ammonia water.

The component (A) may be alkaline electrolyzed water. The alkaline electrolyzed water is not particularly limited, and those generated in electrolysis cells of a one-cell type, a two-cell type, and a three-cell type are used. Alkaline electrolytic water is produced by electrolyzing water or an electrolyte aqueous solution obtained by dissolving an electrolyte in water, and one produced by a known electrolyzed water generation device may be appropriately used. Examples of the electrolyzed water generation device include, for example, alkaline electrolyzed water generation device EW3000A available from Amano Corporation and strong alkaline electrolyzed water generation system (ZK series) available from ZAOH COMPANY, LTD. may be used.

As the electrolyte used for the alkaline electrolyzed water, known electrolytes can be appropriately selected and used. When an electrolysis cell of a one-cell type is used, for example, an alkaline (pH 8.5 to pH 14) electrolyte, such as sodium bicarbonate, potassium bicarbonate, sodium carbonate, potassium carbonate, sodium hydroxide, potassium hydroxide, or sodium metasilicate, is suitably used. In addition, it is generated in an electrolysis cell of a two-cell type or a three-cell type, a neutral (pH 5.5 to pH 8.5) electrolyte such as salt is suitably used in addition to the similarly alkaline electrolyte.

When the component (A) is an alkaline electrolyzed water, specifically, water (alkaline electrolyzed water) having a pH of more than 7.0 or a pH of 7.5 to 12.0 (preferably a pH of 8.0 to 12.0, more preferably a pH of 9.0 to 12.0, still more preferably a pH of 9.5 to 11.5, particularly preferably a pH of 10.0 to 11.5, and most preferably a pH of 10.5 to 11.5) can be produced by electrolyzing water or an electrolyte aqueous solution containing water and an electrolyte by a production device of an alkaline electrolyzed water.

According to one embodiment, the pH of the component (A) is 9.3 to 12.0, 9.5 to 12.0, or 10.0 to 12.0.

As described above, when the component (A) is an alkaline aqueous solution having a pH of 7.5 to 12.0 (preferably a pH of 8.0 to 12.0, more preferably a pH of 9.0 to 12.0, still more preferably a pH of 9.5 to 11.5, particularly preferably a pH of 10.0 to 11.5, and most preferably a pH of 10.5 to 11.5), for example, incorporation of a basic compound may satisfy the pH within the above ranges, may result in an alkaline electrolyzed water having the pH within the above ranges obtained by alkaline electrolysis of water or an electrolyte aqueous solution containing water and an electrolyte.

As described above, in the composition according to the present embodiment, the component (A) preferably contains an alkaline aqueous solution having a pH of 9.0 to 12.0, and is more preferably an alkaline electrolyzed water prepared by electrolyzing water or an electrolyte aqueous solution containing water and an electrolyte.

Component (B)

The composition according to the present embodiment contains sodium benzoate as the component (B). Sodium benzoate is used as an antirust component. A specific example of the component (B) may be a reagent of sodium benzoate itself or a composition (antirust agent) containing sodium benzoate. Examples of the antirust agent containing sodium benzoate include, but are not limited to, ASCOTRAN (registered trademark, the rest is omitted) HPB, and ASCOTRAN AL-4 available from ASCOTEC (sold by GSI Creos Corporation).

The content of the component (B) in the composition according to the present embodiment is preferably 0.01 to 10.0 parts by mass, more preferably 0.03 to 8.0 parts by mass, still more preferably 0.05 to 5.0 parts by mass, particularly preferably 0.08 to 4.0 parts by mass, and most preferably 0.1 to 3.0 parts by mass, relative to 100 parts by mass of the component (A). According to one embodiment, the content of the component (B) in the composition according to the present embodiment may be 0.05 to 2.0 parts by mass, 0.05 to 1.5 parts by mass, 0.05 to 1.0 parts by mass, 0.08 to 1.5 parts by mass, 0.1 to 2.0 parts by mass, 0.1 to 1.5 parts by mass, or 0.1 to 1.0 parts by mass, relative to 100 parts by mass of the component (A).

Component (C)

The coating agent composition according to the present embodiment contains emulsion particles (resin emulsion) as the component (C). The emulsion particles as the component (C) are a state of being dispersed in the composition. The component (C) is preferably resin particles homogeneously dispersed in water, and is more preferably emulsion particles ((meth)acrylic resin emulsion) containing a (meth)acrylic polymer or a (meth)acrylic copolymer. Note that, when the cleaning agent composition according to the present embodiment contains the component (C), it is the coating agent composition according to the present embodiment.

The component (C) may be present by being dispersed in a medium such as water. When the medium such as water is dried, emulsion particles (resin emulsion) are fused to form a film. When the coating agent composition according to the present embodiment contains the component (C), coating (coating film) formed by the coating agent composition has good adhesiveness to a metal part. As a result, the coating agent composition according to the present embodiment can achieve excellent antirust property.

As the component (C) used in the coating agent composition according to the present embodiment, for example, a commercially available (meth)acrylic resin emulsion (polymer acrylic emulsion) can be used, and a resin emulsion or the like containing at least a (meth)acrylic acid derivative can be used. As the (meth)acrylic resin emulsion, (meth)acrylic acid polymer emulsions; and (meth)acrylic acid copolymer emulsions such as ethylene/vinyl acetate/(meth)acrylic acid derivative copolymer emulsion, ethylene/(meth)acrylic acid derivative copolymer emulsion, poly(meth)acrylic acid derivative emulsion, styrene/(meth)acrylic acid derivative copolymer emulsion, and vinyl acetate/(meth)acrylic acid derivative emulsion; and the like can be used. The (meth)acrylic acid derivative means acrylic acid and/or methacrylic acid, and acid derivatives such as esters thereof, and contains at least one or more kinds of these components. The emulsion particles (resin emulsion) may be a self-crosslinking type, or may be a non-self-crosslinking type, but is preferably a non-self-crosslinking type.

Specific examples of the (meth)acrylic acid derivative include, for example, acrylic acid, methacrylic acid, methyl acrylate, methyl methacrylate, ethyl acrylate, ethyl methacrylate, butyl acrylate, butyl methacrylate, 2-ethylhexyl acrylate, 2-ethylhexyl methacrylate, 2-hydroxyethyl acrylate, 2-hydroxyethyl methacrylate, acrylonitrile, methacrylonitrile, acrylamide, and methacrylamide. Among them, as the component (C), (meth)acrylic resin emulsion, which consists of a polymer containing a (meth)acrylic copolymer or a (meth)acrylic acid ester as a constituent monomer, is preferable.

Specific examples of the component (C) include, but are not limited to, Newcoat series (Newcoat KSB-1, Newcoat SFK-1000A, and Newcoat SFK-8000A) available from SHIN-NAKAMURA CHEMICAL Co., Ltd.; JURYMER AC-10S (mass average molecular weight: about 5,000) and JURYMER AS-10SH (mass average molecular weight: about 1,000,000) available from Toagosei Company, Limited; ACRYSET ARL-468 (mass average molecular weight: about 4,000) and ACRYSET ARL-460 available from NIPPON SHOKUBAI CO., LTD.; Polysol AP-1761, Polysol AP-5595N, and Polysol AP-4690N available from Resonac Corporation; and Mowinyl 727, Mowinyl 7525, and Mowinyl 745 available from Japan Coating Resin Corporation.

The glass transition temperature (Tg) of an emulsified polymerized product (cured product) of the emulsion particles (resin emulsion) is preferably -20°C or more and 50°C or less, more preferably -15°C or more and 40°C or less, still more preferably -10°C or more and 30°C or less, particularly preferably -5°C or more and 20°C or less, and most preferably -5°C or more and 10°C or less. As a result, the coating (coating film) formed by the coating agent composition according to the present embodiment can achieve excellent antirust property.

The glass transition temperature Tg of the emulsified polymerized product of the emulsion particles (resin emulsion) means a value determined by converting the glass transition temperature Tga (K) at absolute temperature determined by the following (Mathematical expression 1) into Celsius temperature. Specifically, when monomers constituting the emulsified polymerized product are defined as M1, M2, M3 ⋯ Mn, the glass transition temperatures (K) of homopolymers obtained from each monomer are defined as Tg1, Tg2, Tg3 ⋯ Tgn, and the weight proportions (weight fractions) of the constituent units derived from each monomer in the emulsified polymerized product are defined as W1, W2, W3 ⋯ Wn, the glass transition temperature Tg of the emulsified polymerized product can be calculated from the following (Mathematical expression 1) (Fox equation), where W1 + W2 + W3 + ⋯ + Wn = 1. Note that, its details are described in Bulletin of the American Physical Society, Series 2, Vol. 1, No. 3, p. 123 (1956). Furthermore, as the glass transition temperatures ((Tg1) to (Tgn)) of the homopolymers of various monomers used for calculation by the FOX equation, for example, numerical values described in The finish & paint (Toryo Shuppansha (in Japanese), 10 (No. 358), 1982) can be used.

[Expression 1]

$$1/Tg_a = W1/Tg1 + W2/Tg2 + \cdots + Wn/Tgn \text{ (Mathematical expression 1)}$$

Here, each Wi/Tgi (where each i is a natural number of 1 to n) constituting the right side of the above Mathematical expression 1 corresponds to each monomer Mi constituting the emulsified polymerized product. Therefore, on the right side of the above Mathematical expression 1, there is the same number of Wi/Tgi as the number of kinds of monomers constituting the emulsified polymerized product (n in the case where each i is 1 to n). Therefore, for example, when the (meth)acrylic-styrene copolymer is a binary copolymer composed of monomers M1 and M2, the above Mathematical expression 1 is 1/Tga = W1/Tg1 + W2/Tg2. In addition, for example, when the (meth)acrylic-styrene copolymer is a terpolymer composed of monomers M1, M2, and M3, the above Mathematical expression 1 is 1/Tga = W1/Tg1 + W2/Tg2 + W3/Tg3.

The component (C) essentially contains emulsion particles (preferably (meth)acrylic resin emulsion) and water, but may further contain a crosslinking agent and other components.

The emulsion particles (resin emulsion) used can be obtained by a known method, and can be produced by, for example, a method for emulsifying and polymerizing, in water or an aqueous solvent, a polymerizable monomer that is a raw material of a resin using a polymerization initiator in the presence of an emulsifying agent.

As the emulsifying agent, known emulsifying agents can be used. Examples thereof include anionic, nonionic, cationic, or amphoteric surfactants, and protective colloids such as polyvinyl alcohol.

The content of the component (C) in the coating agent composition according to the present embodiment is preferably 0.1 to 20.0 mass%, more preferably 0.5 to 15.0 mass%, still more preferably 0.8 to 13.0 mass%, even still more preferably 1.0 to 12.0 mass%, and most preferably 2.0 to 8.0 mass%, relative to the total mass (100 mass%) of the coating agent composition. According to one embodiment, the content of the component (C) may be 1.0 to 10.0 mass%, 1.0 to 5.0 mass%, or 1.5 to 8.0 mass%, relative to the total mass (100 mass%) of the coating agent composition. When the content of the component (C) falls within the above ranges, the coating film formed by the coating agent composition becomes a thin and uniform film to the extent of being unable to be visually confirmed, thereby improving the antirust property.

Other components

The composition according to the present embodiment may further contain a surfactant. Examples of the surfactants include anionic surfactants containing an anionic group such as $-SO_3Na$ and $-SO_3NH_4$ in the molecule, nonionic surfactants which are nonionic organic compounds, cationic surfactants formed of a quaternary ammonium salt, and amphoteric surfactants containing an anionic group and a cationic group in the molecule. The surfactants may be used alone or in combination of two or more kinds thereof.

Examples of the anionic surfactants include, for example, polyoxyethylene alkylether acetic acid, polyoxyethylene alkyl sulfate ester, alkyl sulfate ester, polyoxyethylene alkyl ether sulfuric acid, alkyl ether sulfuric acid, alkylbenzene sulfonic acid, alkyl phosphate ester, polyoxyethylene alkyl phosphate ester, polyoxyethylene sulfosuccinic acid, alkyl sulfosuccinic acid, alkylnaphthalenesulfonic acid, alkyldiphenylether disulfonic acid, and salts thereof.

Examples of the cationic surfactants include, for example, alkyltrimethylammonium salts, alkyldimethylammonium salts, alkyl benzyl dimethyl ammonium salts, and alkylamine salts.

Examples of the amphoteric surfactants include, for example, alkylbetaine and alkylamine oxide.

Examples of the nonionic surfactants include, for example, polyoxyalkylene alkyl ethers such as polyoxyethylene alkylether, sorbitan fatty acid ester, glycerin fatty acid ester, polyoxyethylene fatty acid ester, polyoxyethylene alkylamine, and alkylalkanolamide.

In the coating agent composition according to the present embodiment, considering the compatibility with the component (C), a nonionic surfactant is preferable, a polyoxyethylene-based nonionic surfactant is more preferable, and polyoxyethylene alkylether is particularly preferable. The HLB (Hydrophilic-Lipophilic Balance) value of the nonionic surfactant is preferably 8 to 16, more preferably 9 to 15, and still more preferably 10 to 14. Specific examples of the polyoxyethylene-based nonionic surfactants (polyoxyethylene alkylether) include, but are not limited to, NOIGEN series (NOIGEN ET-65, NOIGEN ET-95, NOIGEN ET-115, NOIGEN ET-135, NOIGEN ET-165, and the like) available from DKS Co. Ltd.

The content of the surfactant in the coating agent composition according to the present embodiment is preferably 0.01 to 5.0 mass%, and more preferably 0.1 to 3.0 mass%, relative to the total mass (100 mass%) of the coating agent composition. When the content of the surfactant is 0.01 mass% or more, much more uniform film is formed. When the content of the surfactant is 5.0 mass% or less, stickiness of the surface of the coating film is even further suppressed.

The composition according to the present embodiment may contain an azole compound. The azole compound contains a five-membered ring heterocyclic compound containing one or more nitrogen and a derivative thereof. Incorporation of the azole compound in the composition according to the present embodiment further increases the antirust property. Examples of the azole compound include compounds such as benzotriazole-based compounds, tolyltriazole-based compounds, thiadiazole-based compounds, and imidazole-based compounds. Examples of the exemplary compounds of the azole compound include, for example, triazole, benzotriazole, 4-methylbenzotriazole, and 5-methylbenzotriazole.

The composition according to the present embodiment may contain a storage stabilizer, an antioxidant, a photostabilizer, a heavy metal inactivating agent, a silane coupling agent, a plasticizer, a defoaming agent, a colorant such as a pigment or a dye, a rheology modifier, a flame retardant, or the like as long as the object of the present invention is not impaired.

The composition according to the present embodiment can be used as the cleaning agent composition or the coating agent composition with the component (A) and the component (B) as essential components.

The pH of the cleaning agent composition according to the present embodiment is preferably 8.0 to 10.5, more preferably 8.2 to 10.0, and still more preferably 8.5 to 9.5. When the pH of the cleaning agent composition falls within the above ranges, the antirust property resulting from the cleaning agent composition is much further achieved, and the stability of the cleaning agent composition over time is also improved.

The pH of the coating agent composition according to the present embodiment is preferably 8.0 to 10.5, more preferably 8.0 to 10.0, still more preferably 8.0 to 9.5, and particularly preferably 8.0 to 9.0. When the pH of the coating agent composition falls within the above ranges, the antirust property resulting from the coating agent composition is much further achieved, and the stability of the coating agent composition over time is also improved.

When the composition according to the present embodiment is used as the cleaning agent composition, it contains the component (A) and the component (B). More preferably, the cleaning agent composition contains only the component (A) and the component (B). The pH of the cleaning agent composition is 8.0 to 11.0. The composition according to the present embodiment can be used for a long period of time for cleaning a metal part without making the cleaning agent composition turbid or without generating precipitations, even after the composition according to the present embodiment undergoes a cleaning treatment such as immersion of a metal part such as a bolt in the cleaning agent composition; immersion and emission of ultrasonic waves; immersion and heating (for example, immersion at 80°C for 3 minutes to 1 hour); or immersion and emission of ultrasonic waves during heating (for example, ultrasonic waves are irradiated with the metal part is immersed at 80°C for 3 minutes to 1 hour), and is used as the cleaning agent composition. Note that, immersion of the metal part into the above-described cleaning agent composition may be a state of being continuously immersed or may be a state of being intermittently (discontinuously) immersed. The time of the immersion into the cleaning agent composition (period of use of the cleaning agent composition) may be considered as the total time of actual immersion.

Therefore, according to the present invention, a method for cleaning a metal part, including a cleaning step of immersing a metal part in the cleaning agent composition according to the present embodiment and irradiating ultrasonic waves is also provided.

In addition, according to the present invention, a method for cleaning a metal part, including: a cleaning step of immersing a metal part in the cleaning agent composition according to the present embodiment and irradiating ultrasonic waves; and a drying step of drying the metal part after the cleaning agent step, is also provided. Regarding drying the metal part after immersion into the above-described cleaning agent composition, the metal part may be continuously heated and dried, or may be intermittently (discontinuously) heated and dried.

The temperature of the cleaning agent composition (cleaning temperature of the metal part) in the cleaning step is preferably 40 to 100°C, more preferably 60 to 90°C, and particularly preferably 70 to 85°C. The time (cleaning time) for immersing a metal part in the cleaning agent composition is preferably 1 minute to 3 hours, more preferably 3 minutes to 2 hours, and still more preferably 3 minutes to 1 hour. In addition, in the drying step after the cleaning step, drying in a drying method may be performed by still standing in a hot air dryer or still standing in a thermostat bath or a high temperature and high humidity bath. The drying temperature in the drying step is preferably 25 to 120°C, more preferably 40 to 120°C, still more preferably 50 to 115°C, and particularly preferably 60 to 110°C.

When the composition according to the present embodiment is used as the coating agent composition, it contains the component (A), the component (B), and the component (C). More preferably, the coating agent composition contains only the component (A), the component (B), the component (C), and the surfactant. The pH of the coating agent composition is 8.0 to 11.0, and preferably 8.0 to 10.0. When it is used as the coating agent, the coating agent composition is not discolored and can be used for a long period of time even when a metal part such as a bolt is immersed. The composition according to the present embodiment can be used for a long period of time for coating a metal part without discoloring the coating agent composition, even after the composition according to the present embodiment undergoes a coating treatment such as immersion of a metal part such as a bolt in the coating agent composition; immersion and heating (for example, immersion at 40°C for 1 minute to 1 hour); or immersion and emission of ultrasonic waves during heating (for example, ultrasonic waves are irradiated with the metal part is immersed at 40°C for 3 minutes to 1 hour), and is used as the coating agent composition. Note that, immersion of the metal part into the above-described coating agent composition may be a state of being continuously immersed or may be a state of being intermittently (discontinuously) immersed. The time of the immersion into the coating agent composition (period of use of the coating agent composition) may be considered as the total time of actual immersion.

Therefore, according to the present invention, a method for coating a metal part, including a coating step of immersing a metal part in the coating agent composition according to the present embodiment or immersing a metal part and irradiating ultrasonic waves, and a drying step of drying the metal part after the coating step, is also provided. Note that, regarding drying of the metal part after immersion in the above-described coating agent composition, it may be continuously heated and dried or may be intermittently (discontinuously) heated and dried.

The temperature of the coating agent composition in the coating step is preferably 20 to 100°C, more preferably 25 to 80°C, and particularly preferably 30 to 60°C. The time for immersing the metal part in the coating agent composition is preferably 1 minute to 3 hours, more preferably 3 minutes to 2 hours, and still more preferably 3 minutes to 1 hour. In the drying step after the coating step, regarding the drying method, drying may be performed by still standing in a hot air dryer or still standing in a thermostat bath or a high temperature and high humidity bath. The drying temperature in the drying step is preferably 25 to 120°C, more preferably 40 to 120°C, still more preferably 50 to 115°C, and particularly preferably 60 to 110°C.

The cleaning agent composition according to the present embodiment and the coating agent composition according to the present embodiment are used in a screwing part that is an entire screwing member or a part of the screwing member, followed by cleaning and drying, and then an antirust treatment is performed. More specifically, after cleaning such as immersing a metal part in the cleaning agent composition is performed one or more times, the metal part is immersed in the above coating agent composition and is dried, and then the coating film is formed (coated) on the surface of the metal part, thereby completing the antirust treatment. Although the antirust treatment is also performed by the cleaning agent composition, more excellent antirust property is imparted by further performing the antirust treatment by the above coating agent composition. Immediately after cleaning of the metal part by the cleaning agent composition is completed, the coating film may be formed (coated) by the coating agent composition, but after cleaning of the metal part by the cleaning agent composition is completed, time may elapse until the coating film is formed (coated) by the coating agent composition. For example, after 10 minutes elapses, after one day (24 hours) elapses, after 3 days (72 hours) elapses, after 5 days (120 hours) elapses, or after 7 days (168 hours) elapses from completion of cleaning of the metal part by the cleaning agent composition, the coating film may be formed (coated) by the coating agent composition.

Therefore, according to the present invention, an antirust method of a metal part, including a cleaning step of immersing a metal part in the cleaning agent composition according to the present embodiment and irradiating ultrasonic waves, a coating step of immersing the metal part, or immersing the metal part in the coating agent composition according to the present embodiment and irradiating ultrasonic waves after the cleaning step, and a drying step of drying the metal part after the coating step, is also provided.

In the present embodiment, the metal part may be a screwing member. Examples of the screwing member include, but are not limited to, screws, bolts, screw joints such as nipples, sockets, taper plugs, and elbows having screwing parts, and the inner circumference of nuts. The material of the screwing member is mainly metal, such as iron, aluminum, gold, stainless steel, or SUS. These may also be subjected to a plating treatment such as a zinc plating chromate treatment, or may have oil or the like remaining on the screwing part.

In the case where cleaning by the cleaning agent composition and/or coating by the coating agent composition are performed, when the metal part (screwing member) is immersed in the cleaning agent composition and/or the coating agent composition, an ultrasonic cleaner can be used. As the ultrasonic cleaner, those in which an ultrasonic vibrator and a bath are integrated can be used. Moreover, the bath can be maintained at a predetermined temperature (for example, 25 to 60°C) using a heater or chiller.

The metal part (screwing member) that has been immersed in the cleaning agent composition and/or the coating agent composition is left to stand in a hot air dryer adjusted to an atmosphere of 25 to 120°C, and the metal part (screwing member) can be dried. The drying temperature of the metal part (screwing member) is preferably 40 to 120°C, more preferably 50 to 115°C, and still more preferably 60 to 110°C. By drying the metal part (screwing member) within the above temperature ranges, the evaporation rate of the volatile components can be appropriately adjusted, to improve the antirust property and to prevent generation of rust on the metal part (screwing member). In the case of the coating agent composition, the evaporation rate of the volatile components is appropriately adjusted, and a uniform coating film is formed, thereby further achieving the antirust property. In addition, according to one embodiment, the drying time of the metal part (screwing member) in the hot air dryer is preferably 5 minutes to 1 hour, and more preferably 5 minutes to 30 minutes.

Examples

Next, the present invention will be described in more detail by way of Examples, but the present invention is not limited to only these Examples. Furthermore, a cleaning agent composition is also referred to simply as a cleaning agent, and a coating agent composition is also referred to simply as a coating agent. The cleaning agent composition and the coating agent composition are also collectively referred to as a composition.

[Examples 1 to 7 and Comparative Examples 1 to 13]

The following components were provided in order to prepare a composition. Here, the pH of the component (A) or the component (A') was measured in the same manner as in the pH measurement of the cleaning agent or the pH measurement of the coating agent that will be described later.

Component (A): Water having a pH of 9.0 to 12.0

· Alkaline electrolyzed water having a pH of 11.0 (adjusted by an alkaline electrolyzed water generation device EW3000A available from Amano Corporation)

· Alkaline aqueous solution 1 obtained by adjusting the pH of ion-exchanged water to 10.7 using ammonia water (hereinafter, referred to as Adjusted water 1)

· Alkaline aqueous solution 2 obtained by adjusting the pH of ion-exchanged water to 9.4 using ammonia water (hereinafter, referred to as Adjusted water 2)

Component (A'): Water other than the component (A)

· Ion-exchanged water having a pH of 6.3

Component (B): Sodium benzoate

· Antirust agent containing sodium benzoate as an antirust component (component (B): contained in an amount of 10 mass%) (ASCOTRAN HPB available from ASCOTEC)

· Antirust agent containing sodium benzoate as an antirust component (component (B): contained in an amount of 10 mass%) (ASCOTRAN AL-4 available from ASCOTEC)

Component (B'): Antirust component of sodium benzoate

· Antirust agent containing 2-mercaptobenzothiazole as an antirust component (component (B'): contained in an amount of 15 mass%) (ASCONIUM 142/DA, available from ASCOTEC)

· Antirust agent containing 1, 2, 3-benzotriazole as an antirust component (component (B'): contained in an amount of 15 mass%) (ASCONIUM 112 available from ASCOTEC)

Component (C): Emulsion particles dispersed in the composition

· Water-based polymer acrylic emulsion (solid content corresponding to the component (C): 45 mass%) (Newcoat KSB-1 available from SHIN-NAKAMURA CHEMICAL Co., Ltd.; (meth)acrylic copolymer, non-self-crosslinking-type, Tg: 0°C)

Other components

· Nonionic surfactant (NOIGEN ET-115 available from DKS Co. Ltd.)

The cleaning agents of Examples 1 to 3 and Comparative Examples 1 to 7 were prepared. The component (A) (or the component (A')) and the component (B) (or the component (B')) were weighed and charged into a beaker for stirring, followed by stirring for 10 minutes. The detailed preparation amounts were based on Table 1 and all the numerical values were written in part(s) by mass. pH measurement of cleaning agent, confirmation of cleaning agent appearance, and confirmation 1 of bolt corrosion were also performed in Examples 1 to 3 and Comparative Examples 1 to 7. The results thereof were summarized in Table 1.

[pH measurement of cleaning agent]

A glass electrode-type pH meter (LAQUA D-210P available from HORIBA, Ltd.) was used to measure "pH of cleaning agent" at 25°C. The measurement method of pH is in accordance with JIS Z 8802(2011).

[Confirmation of cleaning agent appearance]

40 parts by mass of the composition and four bolts (material: iron material, product name: hexagonal bolt M10×20 iron full thread (Kongo Byora Co., Ltd.), length: L dimension of 20 mm, diameter: 10 mm) were charged into a 50 mL glass bottle with a lid, and the lid was closed. It was confirmed that the bolts were entirely immersed in the composition. All the compositions were transparent at first. The glass bottle was left to stand in a hot air dryer set at an atmosphere of 80°C for one week. After the glass bottle was removed from the hot air dryer and returned to 25°C, it was visually confirmed based on the following evaluation criteria. The obtained result was considered as "cleaning agent appearance". "Good" is preferable because the cleaning agent can be continuously used without being deteriorated.

Evaluation criteria

Good: The composition kept its initial transparency;

Fair: The composition kept its initial transparency, but generated precipitations;

Poor: The composition got turbid and generated precipitations.

[Confirmation 1 of bolt corrosion]

The bolts used in the above test were removed and were left to stand in a hot air dryer set at an atmosphere of 105°C for 8 minutes, followed by drying. Then, the bolts were left to stand in an environment of 85°C × 85% RH for one day. Then, the appearance was visually confirmed based on the following evaluation criteria, and the obtained result was considered as "confirmation 1 of corrosion". Here, those showing "Fair" or "Poor" in the above test were not subjected to the confirmation and were written as "-".

Evaluation criteria

Good: No rust was generated on the surfaces of the bolts.

Poor: Rust was entirely generated on the surfaces of the bolts.

[Table 1]

| Component | Raw material | pH | Example 1 | Example 2 | Example 3 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Component (A) | Alkaline electrolyzed water | 11.0 | 100 | | | | | 100 | | | 100 | 100 |
| | Adjusted water 1 | 10.7 | | 100 | | | | | 100 | | | |
| | Adjusted water 2 | 9.4 | | | 100 | | | | | 100 | | |
| Component (A') | Ion-exchanged water | 6.3 | | | | 100 | 100 | | | | | |
| Component (B) | HPB | - | 2.2 | 2.2 | 2.2 | | 2.2 | | | | | |
| Component (B') | 142/DA | - | | | | | | | | | 3.4 | |
| | 112 | - | | | | | | | | | | 3.8 |
| Total | | | 102.2 | 102.2 | 102.2 | 100.0 | 102.2 | 100.0 | 100.0 | 100.0 | 103.4 | 103.8 |
| pH of cleaning agent | | | 9.0 | 10.4 | 8.4 | 6.3 | 6.2 | 10.8 | 10.6 | 9.8 | 8.9 | 9.4 |
| Cleaning agent appearance | | | Good | Good | Good | Poor | Fair | Fair | Good | Fair | Poor | Poor |
| Confirmation 1 of bolt corrosion | | | Good | Good | Good | - | - | - | Poor | - | - | - |

EP 4 745 218 A1

13

Examples 1 to 3, in which the component (A) having a pH of 9.0 to 12.0 was used, keep initial transparency in the cleaning agent appearance, compared with Comparative Examples 1 and 2, in which the component (A') having a pH of less than 9.0 was used. In addition, Comparative Examples 3 and 5 contain no component (B) and Comparative Examples 6 and 7 contain an antirust agent other than the component (B), but it was found that all of them get turbid or generate precipitations in the cleaning agent appearance. Moreover, it was confirmed that, in Examples 1 to 3, the cleaning agent appearance is "Good" and the confirmation 1 of bolt corrosion is "Good", so that the cleaning agent can be used for a long period of time, and an antirust effect of screwing members is exhibited. Comparative Example 4 showed the results in which the cleaning agent appearance is "Good" but the confirmation 1 of bolt corrosion is "Poor". In the present Examples, even when an ultrasonic treatment (for example, 80°C × 4 minutes/time, 40 Hz and the like) was performed when the bolts were immersed in the cleaning composition, the results of the cleaning agents of Examples 1 to 3 are confirmed to have good results in the cleaning agent appearance and in confirmation 1 of bolt corrosion ("Good" in both).

The coating agents of Examples 4 to 7 and Comparative Examples 8 to 13 were prepared. The component (A) (or the component (A')), the component (B) (or the component (B')), the component (C), and other components were weighed and charged into a beaker for stirring, followed by stirring for 30 minutes. The detailed preparation amounts were based on Table 2 and all the numerical values were written in part(s) by mass. pH measurement of coating agent, confirmation of coating agent appearance, and confirmation 2 of bolt corrosion were also performed in Examples 4 to 7 and Comparative Examples 8 to 13. The results thereof were also summarized in Table 2.

[pH measurement of coating agent]

A glass electrode-type pH meter (LAQUA D-210P available from HORIBA, Ltd.) was used to measure "pH of coating agent" at 25°C. The measurement method of pH is in accordance with JIS Z 8802(2011).

[Confirmation of coating agent appearance]

Bolts (material: iron material, product name: hexagonal bolt M10×20 iron full thread (Kongo Byora Co., Ltd.), length: L dimension of 20 mm, diameter: 10 mm) cleaned with methylene chloride were used. 40 parts by mass of the composition and four bolts descried above that had been cleaned were charged into a 50 mL glass bottle with a lid, and the lid was closed. It was confirmed that the bolts were entirely immersed in the composition. All the compositions were white at first. The glass bottle was left to stand in a hot air dryer set at an atmosphere of 80°C for one week. After the glass bottle was removed from the hot air dryer and returned to 25°C, it was visually confirmed based on the following evaluation criteria. The obtained result was considered as "coating agent appearance". "Good" is preferable because the coating agent can be continuously used without being deteriorated.

Evaluation criteria

Good: The composition kept its initial white;

Poor: The composition was discolored and turned brown.

[Confirmation 2 of bolt corrosion]

The bolts used in the above test were removed and were left to stand in a hot air dryer set at an atmosphere of 105°C for 8 minutes, followed by drying. Then, the bolts were left to stand in an environment of 85°C × 85% RH for two days. Then, the appearance was visually confirmed based on the following evaluation criteria, and the obtained result was considered as "confirmation 2 of corrosion".

Evaluation criteria

Good: No rust was generated on the surfaces of the bolts.

Fair: Rust was partially generated on the surfaces of the bolts.

Poor: Rust was entirely generated on the surfaces of the bolts.

[Table 2]

| Component | Raw material | pH | Example 4 | Example 5 | Example 6 | Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|
| Component (A) | Alkaline electrolyzed water | 11.0 | 100 | | 100 | | | 100 | | | 100 | 100 |
| | Adjusted water 1 | 10.7 | | 100 | | 100 | | | 100 | | | |
| Component (A') | Ion-exchanged water | 6.3 | | | | | 100 | | | 100 | | |
| Component (B) | HPB | - | 2.4 | 2.4 | | | | | | 2.4 | | |
| | AL-4 | - | | | 2.4 | 2.4 | | | | | | |
| Component (B') | 142/DA | - | | | | | | | | | 3.8 | |
| | 112 | - | | | | | | | | | | 4.1 |
| Component (C) | KSB-1 | - | 9.5 | 9.5 | 9.5 | 9.5 | 9.5 | 9.5 | 9.5 | 9.5 | 9.5 | 9.5 |
| Other components | ET-115 | - | 1.1 | 1.1 | 1.1 | 1.1 | 1.1 | 1.1 | 1.1 | 1.1 | 1.1 | 1.1 |
| Total | | | 113.4 | 113.4 | 113.4 | 113.4 | 111.0 | 111.0 | 111.0 | 113.4 | 114.8 | 115.1 |
| pH of coating agent | | | 8.2 | 9.3 | 8.0 | 9.2 | 7.6 | 9.7 | 9.7 | 7.2 | 8.6 | 9.3 |
| Coating agent appearance | | | Good | Good | Good | Good | Poor | Poor | Good | Poor | Poor | Poor |
| Confirmation 2 of bolt corrosion | | | Good | Good | Good | Good | Poor | Poor | Poor | Fair | Fair | Fair |

Examples 4 to 7, in which the component (A) having a pH of 9.0 to 12.0 was used, keep initial white in the coating agent appearance and also showed "Good" in the confirmation 2 of bolt corrosion, compared with Comparative Example 11, in which the component (A') having a pH of less than 9.0 was used. In addition, Comparative Examples 8, 9, and 10 contain no component (B), and Comparative Example 10 shows "Good" in the coating agent appearance but generated rust in the confirmation 2 of bolt corrosion. Comparative Examples 12 and 13 contain an antirust agent other than the component (B), but all showed occurrence of discoloring in the coating agent appearance, and showed "Fair" in the confirmation 2 of bolt corrosion. In Examples 4 to 7, the coating agent appearance is "Good", the confirmation 2 of bolt corrosion is also "Good", so that the coating agent can be used for a long period of time. In addition, it was confirmed that an antirust effect of the screwing member is sufficiently achieved for two days in an atmosphere of 105°C. In the present Examples, even when an ultrasonic treatment (for example, 40°C × 4 minutes/time, 40 Hz and the like) was performed when the bolts were immersed in the coating agent, the results of the coating agents of Examples 4 to 7 are confirmed to have good results in the coating agent appearance and the confirmation 2 of bolt corrosion ("Good" in both).

In addition, in the present Examples, even when the bolts that had been cleaned with the cleaning agents of Examples 1 to 3 were used to perform coating using the coating agents of Examples 4 to 7, it is confirmed that good results are shown in the coating agent appearance and the confirmation 2 of bolt corrosion ("Good" in both).

The present application is based on Japanese Patent Application No.2023-113473, filed on July 11, 2023, the disclosed contents of which are incorporated herein by reference in its entirety.

Industrial Applicability

In the case where a general cleaning agent is used, when heating and drying are performed after cleaning, rust occurs in much shorter time than one day. However, use of the cleaning agent composition according to the present embodiment can prevent rust on a screwing member that is a metal part even when heating and drying are performed. Moreover, use of the coating agent composition according to the present embodiment in combination achieves an antirust effect for a longer period of time. Before applying a so-called precoat agent that develops reactivity at the time of screwing for treatment, the present invention can be used in a screwing member as its base treatment.

**Claims**

1. A cleaning agent composition comprising a component (A) and a component (B) below:

   component (A): an alkaline aqueous solution; and
   component (B): sodium benzoate,

   wherein a pH of the cleaning agent composition is 8.0 to 11.0.

2. The cleaning agent composition according to claim 1,
   wherein a pH of the component (A) is 9.0 to 12.0.

3. A coating agent composition comprising a component (A) to a component (C) below:

   component (A): an alkaline aqueous solution;
   component (B): sodium benzoate; and
   component (C): emulsion particles,
   wherein a pH of the coating agent composition is 8.0 to 11.0.

4. The coating agent composition according to claim 3,
   wherein a pH of the component (A) is 9.0 to 12.0.

5. The coating agent composition according to claim 3, further comprising:
   a surfactant.

6. The coating agent composition according to claim 5,
   wherein the surfactant is a nonionic surfactant.

7. The coating agent composition according to claim 6,
   wherein the nonionic surfactant is a polyoxyethylene-based nonionic surfactant.

8. The coating agent composition according to claim 3,
   wherein the component (C) is emulsion particles comprising a (meth)acrylic polymer.

9. A method for cleaning a metal part, the method comprising:
   a cleaning step of immersing a metal part in the cleaning agent composition according to claim 1 and irradiating ultrasonic waves.

10. A method for coating a metal part, the method comprising:

    a coating step of immersing a metal part in the coating agent composition according to claim 3, and irradiating ultrasonic waves; and
    a drying step of drying the metal part after the coating step.

11. An antirust method of a metal part, the method comprising:

    a cleaning step of immersing a metal part in the cleaning agent composition according to claim 1 and irradiating ultrasonic waves;
    a coating step of immersing the metal part in the coating agent composition according to claim 3 after the cleaning step, and irradiating ultrasonic waves; and
    a drying step of drying the metal part after the coating step.

12. The method for cleaning a metal part according to claim 9,
    wherein the metal part is a screwing member.

13. The method for coating a metal part according to claim 10,
    wherein the metal part is a screwing member.

14. The antirust method of a metal part according to claim 11,
    wherein the metal part is a screwing member.

## INTERNATIONAL SEARCH REPORT

| International application No. |
|---|
| **PCT/JP2024/024971** |

### A. CLASSIFICATION OF SUBJECT MATTER

*C11D 7/26*(2006.01)i; *C09D 5/02*(2006.01)i; *C09D 7/63*(2018.01)i; *C09D 133/00*(2006.01)i; *C09D 201/00*(2006.01)i; *C11D 1/66*(2006.01)i; *C11D 1/72*(2006.01)i; *C11D 3/20*(2006.01)i; *C11D 3/37*(2006.01)i
FI:  C11D7/26; C11D3/20; C11D1/66; C11D1/72; C11D3/37; C09D5/02; C09D201/00; C09D7/63; C09D133/00

According to International Patent Classification (IPC) or to both national classification and IPC

### B. FIELDS SEARCHED

Minimum documentation searched (classification system followed by classification symbols)

C11D; C09D; B08B; B05C; C08F; C23G; C23C; C23F

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 103469224 A (ANHUI QIMING SURFACE TECHNOLOGY CO., LTD.) 25 December 2013 (2013-12-25) paragraphs [0001], [0019]-[0022], [0034] | 1-2 |
| Y | | 9, 11-12, 14 |
| X | JP 2000-226600 A (NISSHIN MEDEIKO K.K.) 15 August 2000 (2000-08-15) claims, paragraph [0048] | 1-2 |
| X | CN 105112919 A (WUXI QINGYANG MACHINERY MANUFACTURING CO., LTD.) 02 December 2015 (2015-12-02) paragraphs [0012]-[0025] | 1-2 |
| Y | | 9, 11-12, 14 |
| X | JP 2008-248229 A (NIPPON STEEL CORPORATION) 16 October 2008 (2008-10-16) claims, paragraphs [0011], [0017], [0021], [0025], [0035], [0045]-[0049], [0071] | 1-2 |
| Y | | 9, 11-12, 14 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **13 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/024971**

### C. DOCUMENTS CONSIDERED TO BE RELEVANT

| Category* | Citation of document, with indication, where appropriate, of the relevant passages | Relevant to claim No. |
|---|---|---|
| Y | JP 5-293450 A (JIYUKIYOU KIGYO KOFUN YUUGENKOUSHI) 09 November 1993 (1993-11-09) <br> claims, paragraphs [0018]-[0026] | 9, 11-12, 14 |
| X | JP 55-84305 A (BAYER AKTIENGESELLSCHAFT) 25 June 1980 (1980-06-25) <br> page 28, lower left column, line 1 to page 29, upper left column, line 5, table II | 3-8 |
| Y | | 10-11, 13-14 |
| Y | Microfilm of the specification and drawings annexed to the request of Japanese Utility Model Application No. 135902/1984 (Laid-open No. 51972/1986) (MITSUBISHI JIDOSHA KOGYO KABUSHIKI KAISHA) 08 April 1986 (1986-04-08), claims, page 1, line 17 to page 2, line 4 | 10-11, 13-14 |
| Y | JP 2000-117209 A (THREE BOND CO., LTD.) 25 April 2000 (2000-04-25) <br> claims | 12-14 |

Form PCT/ISA/210 (second sheet) (July 2022)

**INTERNATIONAL SEARCH REPORT**
Information on patent family members

International application No.

**PCT/JP2024/024971**

| Patent document cited in search report | | | Publication date (day/month/year) | Patent family member(s) | Publication date (day/month/year) |
|---|---|---|---|---|---|
| CN | 103469224 | A | 25 December 2013 | (Family: none) | |
| JP | 2000-226600 | A | 15 August 2000 | (Family: none) | |
| CN | 105112919 | A | 02 December 2015 | (Family: none) | |
| JP | 2008-248229 | A | 16 October 2008 | (Family: none) | |
| JP | 5-293450 | A | 09 November 1993 | (Family: none) | |
| JP | 55-84305 | A | 25 June 1980 | US 4321175 A<br>column 27, line 1 to column 29, line 11, table II<br>EP 12358 A1 | |
| JP | 61-51972 | U1 | 08 April 1986 | (Family: none) | |
| JP | 2000-117209 | A | 25 April 2000 | (Family: none) | |

Form PCT/ISA/210 (patent family annex) (July 2022)

**EP 4 745 218 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015078410 A

- JP 2023113473 A

**Non-patent literature cited in the description**

- *Bulletin of the American Physical Society*, 1956, vol. 1 (3), 123